# FASCICULE DE BREVET EUROPEEN

(11) **EP 0 451 625 B1**
(45) Date de publication et mention de la délivrance du brevet: **21.09.1994**
(21) Numéro de dépôt: 91104886.6
(22) Date de dépôt: 27.03.1991
(51) Int. Cl.: B60C 15/02, B60C 3/02, B60B 21/10

(54) **Ensemble comportant un pneumatique torique et procédé de fabrication dudit ensemble**
Torisch-Luftreifen enthaltende Einheit und Verfahren zur Herstellung dieser Einheit
Assembly comprising a toric tyre and method of manufacturing it

(30) Priorité: 11.04.1990 FR 9004789
(43) Date de publication de la demande: 16.10.1991
(73) Titulaire: COMPAGNIE GENERALE DES ETABLISSEMENTS MICHELIN - MICHELIN & CIE, 63040 Clermont-Ferrand Cédex (FR)
(72) Inventeur: Pompier, Jean-Pierre, F-63530 Volvic (FR)
(74) Mandataire: Bauvir, Jacques

(56) Documents cités:
- EP-A- 0 133 150
- FR-A- 2 366 944
- US-A- 4 265 293

## Description

La présente invention concerne les pneumatiques, les roues et le montage des pneumatiques sur les roues.

Depuis fort longtemps, les pneumatiques et les roues peuvent être séparés l'un de l'autre, et la roue elle-même est fixée de façon amovible sur son moyeu. La roue comporte une jante, qui, avec le pneumatique, délimite l'enceinte pneumatique remplie d'air sous pression. Elle comporte aussi un disque destiné à être fixé sur le moyeu. La jante est fixée sur le disque soit de façon définitive (rivets, soudure), soit de façon amovible.

Le pneumatique est démontable de la jante pour pouvoir effectuer la réparation nécessaire en cas de crevaison et pour pouvoir le remplacer lorsqu'il est usé. Ce démontage requiert un équipement d'atelier et, à chaque démontage/montage, il faut effectuer un nouvel équilibrage de l'ensemble. Le démontage de la roue par rapport au moyeu est très simple et à la portée de l'utilisateur qui doit pouvoir effectuer cette opération pour se dépanner : en cas de crevaison, il démonte la roue concernée et monte une roue de secours.

L'association du pneumatique et de sa jante ne va pas sans poser quelques problèmes. Afin d'assurer l'étanchéité de l'ensemble, et aussi afin de pouvoir transmettre un couple, il y a toujours un serrage entre le pneumatique et la jante, plus précisément entre la face inférieure du bourrelet du pneumatique et le siège de la jante. La position précise du bourrelet sur son siège est déterminée par le rebord de jante qui joue un rôle de butée contre laquelle le bourrelet est plaqué par la pression de gonflage.

Mais, à cause du serrage sur le siège, la position exacte du bourrelet est mal maîtrisée : le plan que fait celui-ci, matérialisé par exemple par un plan tangent a la tringle, peut ne pas être rigoureusement parallèle au rebord de jante. La tringle peut ne pas être parfaitement parallèle au rebord de jante. La tringle peut ne pas être parfaitement concentrique au siège de la jante, et ceci, même en l'absence de tout défaut de forme du pneumatique. En roulage, il apparaît parfois une usure du pneumatique provoquée par de légers mouvements relatifs de celui-ci par rapport à l'extrémité radialement supérieure du rebord de jante.

L'augmentation constante des performances des véhicules automobiles, en particulier des voitures de tourisme, et l'augmentation constante de la qualité du comportement de ceux-ci imposent de resserrer toujours davantage les tolérances de fabrication des pneumatiques. On constate que le montage du pneumatique sur sa jante peut masquer les performances du pneumatique : lorsque l'on qualifie le comportement d'un véhicule, on peut observer des différences aussi grandes, voire plus grandes entre deux passages avec le ou les mêmes pneumatiques, ceux-ci ayant été simplement démontés puis remontés entre les passages, que entre des passages avec des pneumatiques différents que l'on cherche à classer. Cela montre la précision, la finesse de réaction que l'on attend des pneumatiques, et cela illustre aussi les difficultés qu'il y a à perfectionner le comportement des véhicules si le montage du pneumatique sur la jante est insuffisamment maîtrisé.

L'invention propose donc de concevoir un ensemble dans lequel le pneumatique est monté en usine sur sa jante, et ne peut plus être démonté par la suite, afin de contrôler avec grande rigueur la qualité de l'association jante/pneumatique. Le démontage du pneumatique par rapport au véhicule est alors reporté ailleurs, par exemple entre jante et disque de roue ou entre roue et moyeu. Le document FR-A-2 366 944 montre un ensemble comportant un pneumatique du type en tore fermé, ayant des caractéristiques correspondant au préambule de la revendication 1.

L'ensemble selon l'invention est composé d'un pneumatique du type en tore fermé, et d'une jante supportant ledit pneumatique. Le pneumatique est renforcé par une carcasse qui forme également un tore fermé. L'ensemble comporte deux tringles disposées à l'intérieur de la carcasse, au voisinage des extrémités latérales de la jante, de façon à enserrer la carcasse entre lesdites tringles et la jante, le pneumatique étant immobilisé à la surface radialement extérieure de la jante par lesdites tringles. La position de la tringle par rapport à la jante, à chacune des extrémités latérales de la jante, est définie par un épaulement, aménagé sur la jante. L'ensemble selon l'invention est caractérisé par les points suivants : dans un plan de coupe contenant l'axe de rotation,
- -: ledit épaulement est prolongé axialement vers l'extérieur par un siège situé radialement en totalité à un diamètre inférieur au diamètre d'épaulement mesuré à l'épaulement de la jante ;
- -: le diamètre inférieur mesuré sous la tringle est inférieur au diamètre d'épaulement ;
- -: le profil de la tringle épouse le profil du siège de la jante au moins sur un secteur de 45° balayé en se déplaçant vers l'intérieur de la jante à partir d'une ligne fictive perpendiculaire à l'axe de rotation, abaissée à partir du centre de gravité de la section de ladite tringle par un demi-plan de coupe contenant l'axe de rotation,
- -: α < β, α étant l'angle mesuré par rapport à une droite perpendiculaire à l'axe de rotation, que fait la tangente à la nappe de carcasse à l'endroit où elle quitte la tringle du côté axialement extérieur au pneumatique, et β étant l'angle, mesuré de la même façon, que fait la tangente à la nappe de carcasse à l'endroit où elle quitte la tringle du côté axialement intérieur au pneumatique,
- -: le bord radialement intérieur de la tringle est arrondi entre lesdits endroits où la nappe de carcasse quitte la tringle.

Dans cette conception, la jante est conçue comme une pièce d'usure, et doit être remplacée en même temps que le pneumatique, ce qui n'est pas pénalisant sur le plan économique car le surcoût d'un pneumatique monté sur une jante et équilibré en usine est compensée approximativement par la valeur de l'ensemble des opérations supprimées, à savoir le démontage de l'ancien pneumatique, le montage du nouveau pneumatique et l'équilibrage en atelier.

En outre, le fait d'associer pneumatique et jante en un seul produit offert sur le marché augmente les possibilités d'implantation d'accessoires dont sont ou seront de plus en plus pourvus les pneumatiques : capteurs de pression de gonflage, de température, et composants pour dispositif de surveillance des pneumatiques, supports ou autres dispositifs pour améliorer la capacité à rouler sans pression, éléments pour modifier à la demande la pression de gonflage des pneumatiques. Par le fait de cette association, il est également plus facile d'incorporer dans le pneumatique des solides inertes pour en diminuer le volume intérieur. Cette diminution de volume intérieure est recherchée dans le cas où l'on veut réaliser un pneumatique à pression variable : en effet, à un débit d'air donné pour l'équipement permettant d'augmenter ou de diminuer la pression, le changement effectif de la pression interne du pneumatique sera d'autant plus rapide que son volume interne d'air est plus réduit.

Un autre avantage de l'invention est lié à la totale suppression du rebord de jante, encore appelé crochet de jante : la hauteur de flanc disponible pour assurer la souplesse du pneumatique par flexion du flanc est plus grande il est donc possible d'adopter des rapports H/B plus faibles sans diminuer le confort, et donc d'augmenter le volume disponible à l'intérieur de la roue, notamment pour les freins, ou pour l'ancrage des bras de suspension ou pour loger les pivots. Dans une autre optique, il est possible de diminuer le diamètre hors tout du pneumatique pour augmenter le volume utile du véhicule ainsi équipé.

Dans le but d'améliorer encore la qualité de l'association jante/pneumatique, l'invention prévoit aussi un procédé de fabrication dans lequel la jante est utilisée comme support de fabrication du pneumatique. Tous les éléments constitutifs de l'ébauche crue du futur pneumatique sont posés sur ladite jante, puis la jante supportant l'ébauche crue est introduite dans un moule venant s'adapter aux bords de la jante, l'intérieur du pneumatique étant alors rempli d'un fluide sous une pression adéquate pour la phase de moulage et de vulcanisation.

D'autres détails et avantages de l'invention apparaissent dans la suite qui décrit de façon non limitative une réalisation de l'invention, illustrée grâce aux dessins dans lesquels :
- la figure 1 est une coupe dans un plan contenant l'axe de rotation d'un ensemble selon l'invention ;
- les figures 2 à 7 schématisent la fabrication d'un ensemble selon l'invention ;
- les figures 8 à 10 illustrent des jantes utilisables pour réaliser l'invention.

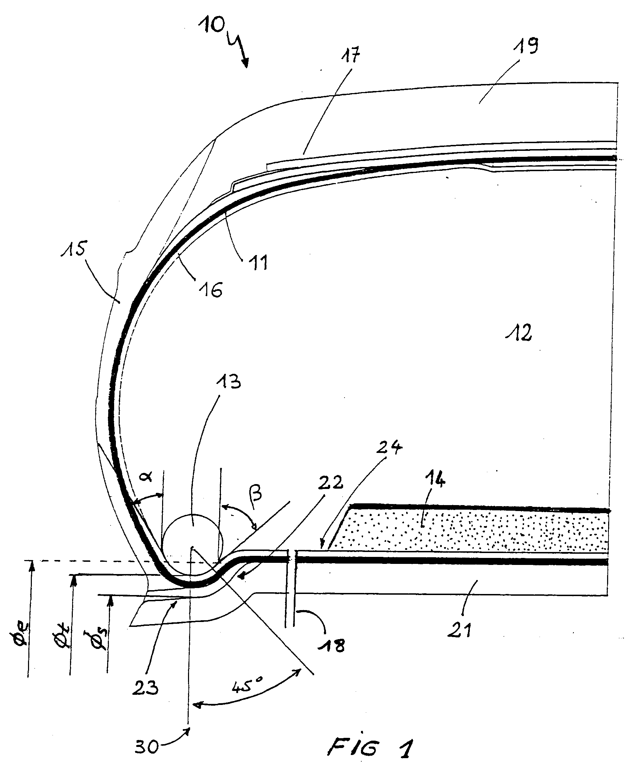

A la figure 1, on aperçoit un pneumatique du type en tore fermé 10 monté sur une jante 21. On appelle pneumatique en tore fermé un pneumatique qui délimite totalement l'enceinte soumise à la pression de gonflage 12, alors que les pneumatiques usuels doivent être associés à une jante pour définir l'enceinte soumise à la pression de gonflage. Ce pneumatique 10 est renforcé par une carcasse 11 qui fait tout le tour du pneumatique. Vue en section radiale, cette carcasse est donc fermée. L'ensemble comporte deux tringles 13 disposées à l'intérieur de la carcasse 11, au voisinage des extrémités axiales de la jante 21.

La carcasse 11 est enserrée entre lesdites tringles 13 et la jante 21. A chaque extrémité latérale de la jante 21, on trouve un épaulement 22, prolongé axialement vers l'extérieur par un siège 23. Le diamètre Φₛ du siège 23, mesuré en n'importe quel endroit de celui-ci, est toujours inférieur au diamètre d'épaulement Φₑ. En outre, le profil de la tringle 13 épouse le profil du siège de la jante au moins sur un secteur de 45° défini de la façon suivante : on trace une ligne fictive 30 perpendiculaire à l'axe de rotation et abaissé à partir du centre de gravité de la section de la tringle 13, et on opère une rotation de 45° autour du centre de gravité du côté axialement intérieur de ladite ligne fictive 30. Dans la présente invention, la tringle 13 constitue non seulement un élément de renforcement devant jouir de caractéristiques mécaniques suffisantes, mais le rôle de la tringle consiste également à définir une forme qui accompagne le pneumatique à l'endroit où il quitte le contact avec la jante 21.

Ainsi donc, non seulement la forme de la tringle 13 doit correspondre à la forme de la jante 21 comme expliqué ci-dessus, mais encore au-delà en s'éloignant axialement vers l'extérieur, le bord radialement inférieur de la tringle doit être arrondi pour permettre à la carcasse de s'enrouler correctement puis de quitter la tringle avec une orientation radiale vers le haut appropriée. L'allure de la carcasse aux endroits où elle quitte le contact avec la tringle est caractérisée par les angles α et β, α pour le côté axialement extérieur de la tringle, et β pour le côté axialement intérieur de la tringle.

Les angles α et β sont mesurés tous deux par rapport à une droite perpendiculaire à l'axe de rotation."α" est l'angle que fait par rapport à cette droite perpendiculaire à l'axe de rotation la tangente à la nappe carcasse à l'endroit où elle quitte la tringle du côté axialement extérieur du pneumatique. "β" est l'angle que fait par rapport à ladite droite perpendiculaire, la nappe de carcasse à l'endroit où elle quitte la tringle du côté axialement intérieur au pneumatique. Selon l'invention, l'angle α doit toujours être inférieur à l'angle β. De préférence, β est compris entre 30° et 80°. Les valeurs de 30° pour α et de 45° pour β se sont révélées particulièrement intéressantes.

Cette condition est destinée à garantir que les efforts transmis à la tringle par la nappe de carcasse aient une résultante R qui soit toujours orientée axialement vers l'intérieur du pneumatique. En effet, en supposant que les tensions T₁ du côté axialement intérieur de la tringle et T₂ du côté axialement extérieur de la tringle sont égales, ce qui est exact aux efforts de frottement près, cette différence d'angle garantit que les efforts auxquels sera soumise la tringle seront toujours orientés vers l'intérieur du pneumatique.

La tringle doit être dimensionnée de telle sorte que le diamètre inférieur Φₜ mesuré sous la tringle soit toujours inférieur au diamètre Φₑ mesuré à l'épaulement de la jante. De la sorte, la tringle est toujours en appui sur la jante et son positionnement est assuré de façon rigoureuse.

En utilisation, il est possible que la résultante R des efforts appliqués à la tringle soit orientée axialement vers l'extérieur dans la zone correspondant au contact du pneumatique avec la route. Cependant, partout ailleurs, l'orientation des efforts appliqués à la tringle est toujours dirigée vers l'intérieur de la jante. La résultante globale des actions sur la tringle sera toujours orientée vers l'intérieur de la jante et il n'est donc pas possible que la tringle puisse quitter sa position.

Entre les deux épaulements 22, la jante forme une zone cylindrique 24 pouvant constituer un appui dans le sens radial pour la bande de roulement en cas de roulage à pression insuffisante. De façon fort avantageuse, il est possible de disposer à cet endroit un coussin 14 en caoutchouc situé entre les deux tringles, adjacent à la jante. Ce coussin 14 est destiné à constituer un appui pour la bande de roulement.

Dans les procédés de fabrication classiques des pneumatiques, il y a toujours un ou plusieurs transferts ou manipulations de l'ébauche crue du pneumatique. A ce stade de la fabrication, le caoutchouc n'étant pas encore vulcanisé, les propriétés mécaniques de l'ébauche sont médiocres. Les manipulations de l'ébauche sont donc susceptibles d'altérer l'ébauche, en en modifiant les dimensions, et/ou en changeant légèrement la position de certains constituants par rapport à d'autres. L'invention prévoit de réaliser l'ensemble constitué par un pneumatique et une jante en utilisant la jante comme un support de tous les éléments dès le début de la fabrication.

La jante 21 sert donc de tambour de fabrication, sur lesquel on va enrouler les différents constituants, dans l'ordre requis dans l'architecture du pneumatique.

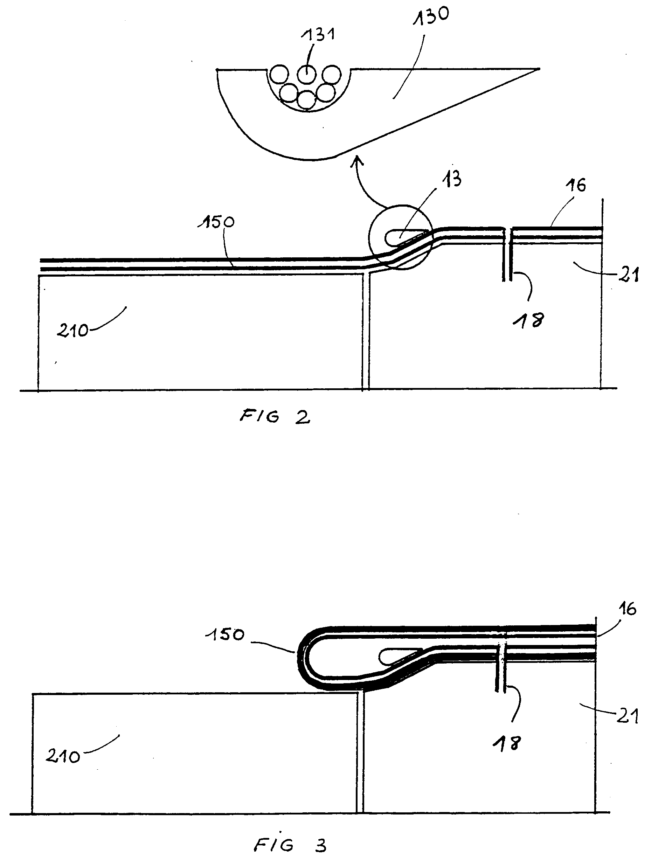

Aux figures 2 à 6, on aperçoit un poste de fabrication comportant essentiellement la jante 21 et, de part et d'autre de celle-ci, des supports 210 quasi-cyclindriques. Seule une moitié axiale a été représentée sur les schémas des figures 2 à 7. L'ensemble qui vient d'être décrit peut être fabriqué de la façon suivante. Sur la jante 21, on enroule d'abord en un tour un complexe 150 comportant les flancs 15 et la nappe de carcasse 11. Ensuite dans un second enroulement, on dépose la couche de gomme intérieure 16. De préférence, celle-ci a subi un traitement de prévulcanisation car elle va servir de membrane de gonflage pendant la vulcanisation. Elle doit donc être étanche, et chimiquement insensible au fluide caloporteur qui va être utilisé.

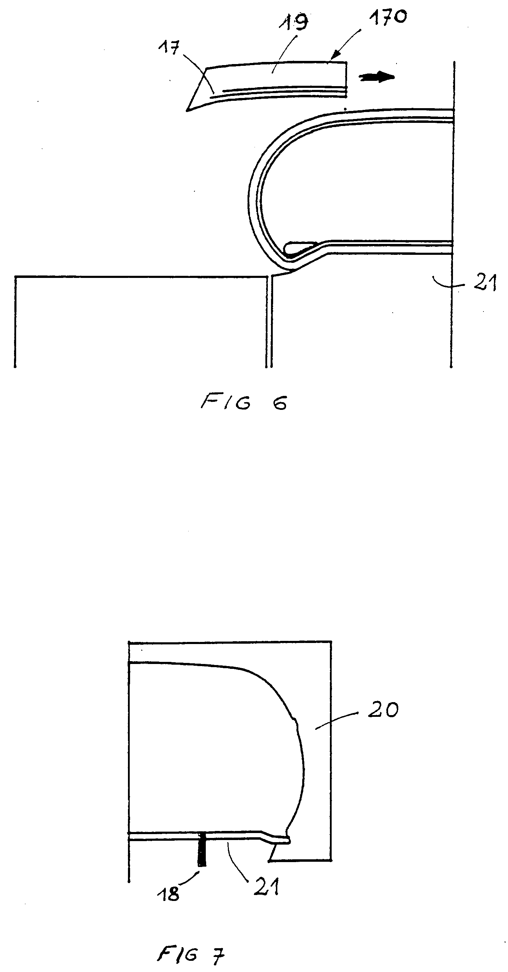

A l'étape ultérieure, on enroule sur la jante 21 le coussin 14 et on dispose les tringles 13. Elles peuvent être réalisées séparément ou bien constituées sur place de la manière suivante : on enroule un profilé 130 matérialisant la forme souhaitée pour la face radialement intérieure de la tringle, ledit profilé se présentant sous la forme d'un anneau fendu. A l'intérieur de ce profilé, on enroule plusieurs tours d'un fil 131, à concurrence de la résistance mécanique que l'on souhaite obtenir. Cette phase de la fabrication est illustrée par la figure 2.
Ensuite, on relève la couche de gomme intérieure pour effectuer une soudure par superposition, de telle sorte que cette soudure va se trouver approximativement au centre de la bande de roulement, comme cela apparaît à la figure 3. De la même façon, on relève les deux extrémités de la nappe de carcasse 11 pour effecter là aussi une soudure par superposition. Ensuite on soumet l'enceinte 12 ainsi constituée à une légère pression de gonflage pour lui donner une conformation suffisante pour poser un anneau 170 fabriqué par ailleurs, comportant les nappes de sommet 17 et la bande de roulement 19 (voir figure 6).

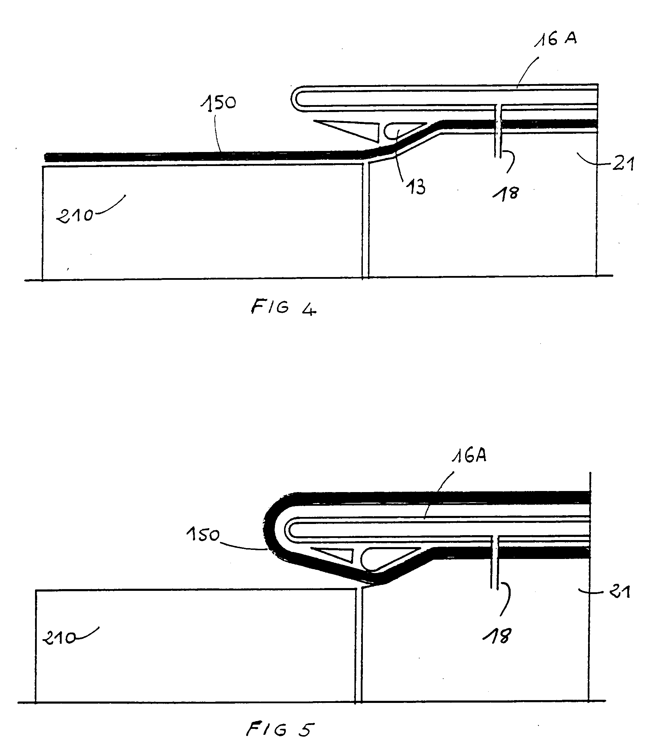

En variante du procédé de réalisation, on remplace la gomme intérieure 16 par une chambre 16A constituant à la fois la chambre à air du futur pneumatique, et la membrane de conformation ainsi que la membrane de moulage et de vulcanisation. Cette chambre 16A est réalisée séparément et préalablement selon les techniques bien connues pour les chambres à air ou les membranes de conformation/vulcanisation. Elle est de préférence prévulcanisée pour garantir une bonne étanchéité de la chambre, soumise ultérieurement à une pression de gonflage, d'abord faible pour la conformation imposée par la fabrication de l'ébauche (avant pose des nappes de sommets) puis élevée pendant la vulcanisation. A la figure 4, on voit que cette chambre 16A est posée par dessus les tringles 13. Cette chambre 16A doit être traitée de façon à favoriser le collage de celle-ci sur les autres constituants de pneumatique. Il convient donc d'éviter d'utiliser des agents de démoulage sur la paroi extérieure de la chambre 16A. La suite de la fabrication est similaire. A la figure 5, on voit que l'on retourne le complexe 150 pour le faire adhérer corrrectement sur la chambre 16A, la soudure par superposition des nappes de carcasse étant disposée sensiblement au centre du pneumatique.

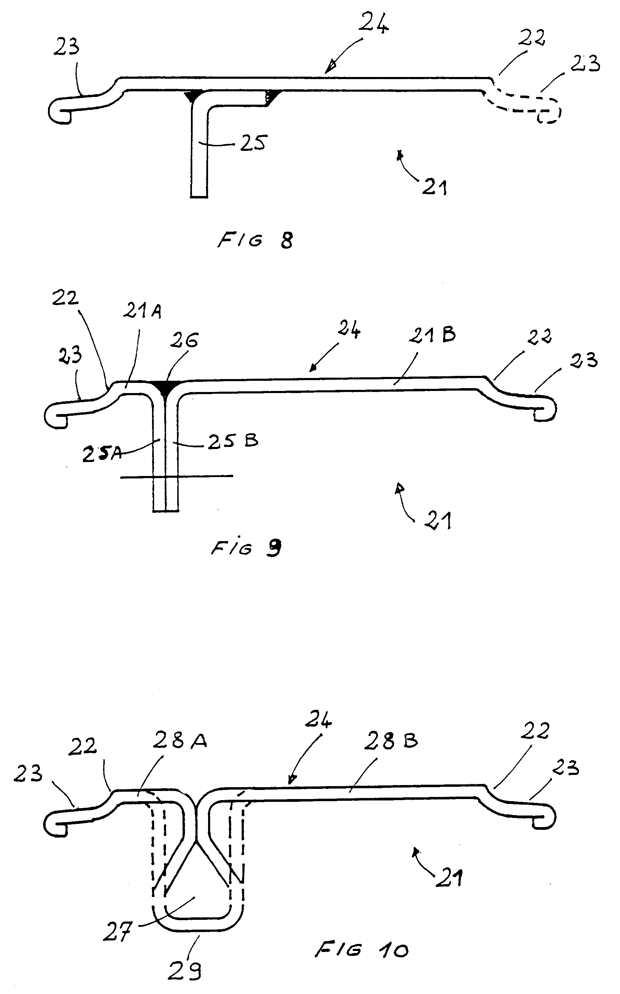

La figure 7 représente la phase de moulage et de vulcanisation. La jante 21 ferme le moule 20 du côté radialement intérieur. Par la valve 18, on soumet l'intérieur du pneumatique à une pression de moulage adéquate, et on apporte les calories en totalité par l'extérieur.

Avec le type de tringle qui a été décrit plus haut, il est possible de se servir des fils 131 constituant la tringle 13 comme antenne de communication entre le véhicule et les éléments de contrôle du pneumatique que l'on peut disposer à l'intérieur du pneumatique.

Les figures 8, 9 et 10 illustrent différentes réalisations possibles pour la jante. Dans cette invention, la jante 21 doit, de préférence, présenter une surface cylindrique 24 sensiblement plane entre les épaulements, ceci afin de servir d'appui pour les éléments du pneumatique, notamment au cours de la fabrication. En outre, les sièges 23 de jante 21 étant situés à un niveau radialement inférieur au niveau des épaulements, il est nécessaire de prévoir un élément supplémentaire afin de pouvoir fixer la jante à un disque ou à un moyeu. Les différentes variantes illustrées aux figures donnent différentes solutions possibles.

Il est possible de fixer, par soudure, un voile 25 à la jante, et après mise en place du voile 25, de repousser le métal pour obtenir le second siège 23 de jante représenté en traits interrompus à la figure 8. A la figure 9, on voit que la jante est obtenue par assemblage de deux demi-jantes 21A et 21B, comportant chacune un voile 25A et 25B. Ces deux demi-jantes 21A et 21B sont assemblées par quelques points de soudure 26 qui doivent assurer la résistance mécanique suffisante, mais ne doivent pas nécessairement réaliser un cordon étanche, l'étanchéité de l'enceinte pneumatique étant totalement assurée par le pneumatique lui-même du type en tore fermé. Dans cette variante, la fixation de la jante sur le moyeu ou sur le disque, peut être assurée grâce aux deux voiles 25A et 25B.

Enfin une dernière variante est illustrée à la figure 10, où l'on voit que, à un stade intermédiaire de la fabrication, la jante 21 comporte un creux 27 destiné à préformer les voiles de liaison avec le disque, le creux étant obturé en fin de fabrication par rapprochement axial relatif des deux portées cylindriques 28A et 28B. Dans ce cas là, il est possible de venir fixer un disque par soudure à l'extrémité radialement inférieure 29 du creux central 27, ou tout autre moyen de fixation.

## Revendications

1. Ensemble composé d'un pneumatique (10) du type en tore fermé, et d'une jante (21) supportant ledit pneumatique (10), le pneumatique (10) étant renforcé par une carcasse (11) qui forme également un tore fermé, l'ensemble comportant deux tringles (13) disposées à l'intérieur de la carcasse (11), au voisinage des extrémités latérales de la jante (21), de façon à enserrer la carcasse (11) entre lesdites tringles (13) et la jante (21), le pneumatique (10) étant immobilisé à la surface radialement extérieure de la jante (21) par lesdites tringles (13), la position de la tringle (13) par rapport à la jante (21), à chacune des extrémités latérales de la jante (21), étant définie par un épaulement (22) aménagé sur la jante (21),
caractérisé en ce que, dans un plan de coupe contenant l'axe de rotation,
- ledit épaulement est prolongé axialement vers l'extérieur par un siège (23) situé radialement en totalité à un diamètre inférieur au diamètre (⌀ₑ) d'épaulement (22) mesuré à l'épaulement de la jante ;
- le diamètre inférieur (⌀ₜ) mesuré sous la tringle (13) est inférieur au diamètre (⌀ₑ) d'épaulement (22) ;
- le profil de la tringle (13) épouse le profil du siège (23) de la jante (21) au moins sur un secteur de 45° balayé en se déplaçant vers l'intérieur de la jante à partir d'une ligne fictive (30) perpendiculaire à l'axe de rotation, abaissée à partir du centre de gravité de la section de ladite tringle (13) par un demi-plan de coupe contenant l'axe de rotation,
- α < β, α étant l'angle mesuré par rapport à une droite perpendiculaire à l'axe de rotation, que fait la tangente à la nappe de carcasse (11) à l'endroit où elle quitte la tringle (13) du côté axialement extérieur au pneumatique (10), et β étant l'angle, mesuré de la même façon, que fait la tangente à la nappe de carcasse (11) à l'endroit où elle quitte la tringle (13) du côté axialement intérieur au pneumatique (10),
- le bord radialement intérieur de la tringle est arrondi entre lesdits endroits où la nappe de carcasse quitte la tringle.

2. Ensemble selon la revendication 1, caractérisé en ce que les deux épaulements (22) sont reliés par une zone cylindrique (24) formant un appui quasi continu, dans le sens radial, de diamètre sensiblement constant.

3. Ensemble selon la revendication 1 ou 2, caractérisé en ce qu'il comporte un coussin (14) en caoutchouc situé entre les deux tringles (13), adjacent à la jante (21), destiné à servir d'appui pour la bande de roulement (16) du pneumatique (10) en cas de roulage à pression insuffisante.

4. Ensemble selon l'une des revendications 1 à 3, caractérisé en ce que β est compris entre 30° et 80°.

5. Ensemble selon la revendication 4, caractérisé en ce que α vaut sensiblement 30° et β vaut sensiblement 45°.

6. Ensemble selon l'une des revendications 1 à 5, caractérisé en ce que chaque tringle (13) est formée par un profilé définissant le profil de la tringle du côté radialement inférieur, des fils étant enroulés à l'intérieur dudit profilé.

7. Ensemble selon la revendication 6, caractérisé en ce que lesdits fils constituent l'antenne de communication entre le véhicule et des éléments de contrôle de l'état du pneumatique montés sur ledit ensemble.

8. Procédé de fabrication d'un ensemble selon l'une des revendications 1 à 7, caractérisé en ce que le pneumatique (10) est progressivement construit sur la jante (21) en disposant les constituants dans l'ordre requis par l'architecture du pneumatique.

9. Procédé selon la revendication 8, caractérisé en ce que, sur la jante 21, on dispose d'abord au moins la ou les nappes de carcasse (11) et les tringles (13), puis on dispose une chambre prévulcanisée (16A), et ensuite on retrousse la ou les nappes de carcasse de façon à effectuer une soudure par superposition disposée sensiblement au centre de la jante et radialement sur ladite chambre (16A).

## Claims

1. A unit comprised of a closed torus type tyre (10) and a rim (21) for supporting said tyre (10), the tyre (10) being reinforced by a carcass (11) which likewise forms a closed torus, the unit comprising two bead wires (13) positioned on the inside of the carcass (11) near the lateral ends of the rim (21) for tightly securing the carcass (11) between said bead wires (13) and the rim (21), the tyre (10) being immobilized on the radially exterior surface of the rim (21) by said bead wires (13), the position of the bead wire (13) in relation to the rim (21), at each of the lateral ends of the rim (21), being defined by a shoulder (22) provided on the rim (21),
characterised in that, in a cutting plane containing the axis of rotation,
- said shoulder is extended axially outward by a seat (23) entirely situated radially at a diameter which is less than the diameter (⌀ₑ) of the shoulder (22) measured at the shoulder of the rim;
- the lower diameter (⌀ₜ) which is measured from under the bead wire (13) is less than the diameter (⌀ₑ) of the shoulder (22);
- the profile of the bead wire (13) assumes the profile of the seat (23) of the rim (21) over at least a 45° swept sector being displaced toward the interior of the rim from an imaginary line (30) which is perpendicular to the axis of rotation, dropped from the centre of gravity of the section of said bead wire (13) by a cutting half-plane containing the axis of rotation;
- α < β, α being the angle measured in relation to a straight line perpendicular to the axis of rotation which the tangent to the carcass ply (11) makes at a position where it leaves the bead wire (13) on the axially exterior side of the tyre (10), and β being the angle, measured in the same way, which the tangent to the carcass ply (11) makes at the position where it leaves the bead wire (13) on the axially interior side of the tyre (10),
- the radially inner edge of the bead wire is rounded between said positions where the carcass ply leaves the bead wire.

2. The unit according to claim 1, characterised in that the two shoulders (22) are connected by a cylindrical zone (24) forming a substantially continuous support, in the radial direction, of a substantially constant diameter.

3. The unit according to claim 1 or 2, characterised in that it comprises a rubber cushion (14) situated between the two bead wires (13), adjacent to the rim (21) and intended to serve as a support for the tread (16) of the tyre (10) when it is running with insufficient pressure.

4. The unit according to one of claims 1 to 3, characterised in that β is between 30° and 80°.

5. The unit according to claim 4, characterised in that α is equivalent to approximately 30° and β is equivalent to approximately 45°.

6. The unit according to one of claims 1 to 5, characterised in that each bead wire (13) is formed by a section defining the shape of the bead wire on the radially lower side with wires being wound inside said section.

7. The unit according to claim 6, characterised in that said wires constitute the antenna for communication between the vehicle and elements for monitoring the state of the tyre that are mounted on said unit.

8. A process for producing a unit according to one of claims 1 to 7, characterised in that the tyre (10) is progressively constructed on the rim (21) by arranging the constituents in the order required by the structure of the tyre.

9. A process according to claim 8, characterised in that first of all at least the carcass ply or plies (11) and the bead wires (13) are arranged on the rim (21), then a pre-vulcanised chamber (16A) is arranged, and then the carcass ply or plies is or are turned over so as to form a weld by superposition arranged substantially in the centre of the rim and radially on said chamber (16A).

## Patentansprüche

1. Einheit aus einem geschlossenen torischen Luftreifen (10) und einer Felge (21), die den Luftreifen (10) trägt, wobei der Luftreifen (10) durch eine Karkasse (11) verstärkt ist, die ebenfalls einen geschlossenen Torus bildet, wobei die Einheit zwei Wulstkerne (13) aufweist, die innerhalb der Karkasse (11) in der Nähe der seitlichen Enden der Felge (21) so angeordnet sind, daß die Karkasse (21) zwischen den Wulstkernen (13) und der Felge (21) eingeklemmt ist, wobei der Luftreifen (10) an der radial äußeren Oberfläche der Felge (21) durch die Wulstkerne (13) unbeweglich gemacht ist, wobei die Position des Wulstkerns (13) bezüglich der Felge (21) an jedem der seitlichen Enden der Felge (21) durch eine Schulter (22) definiert ist, die an der Felge (21) gebildet ist, dadurch gekennzeichnet, daß in einer die Drehachse enthaltenden Schnittebene
- die Schulter axial nach außen durch einen Sitz (23) verlängert ist, der radial zur Gänze bei einem kleineren Durchmesser als dem Durchmesser (Φₑ) der Schulter (22) gemessen an der Schulter der Felge, angeordnet ist;
- der unter dem Wulstkern (13) gemessene kleinere Durchmesser (Φₜ) kleiner als der Durchmesser (Φₑ) der Schulter (22) ist;
- das Profil des Wulstkerns (13) dem Profil des Sitzes (23) der Felge (21) wenigstens auf einem Sektor von 45° folgt, der überstrichen wird, bei einer Bewegung in Richtung des Felgeninneren ausgehend von einer zur Drehachse senkrechten fiktiven Linie (30), die vom Schwerpunkt des Querschnitts des Wulstkerns (13) abgesenkt ist, in einer die Drehachse enthaltenden Schnitthalbebene,
- α < β, wobei α der der bezüglich einer zur Drehachse senkrechten Geraden gemessene Winkel ist, den die Tangente der Karkassenlage (11) an der Stelle einnimmt, an der sie sich vom Wulstkern (13) an der axial äußeren Seite des Luftreifens (10) löst, und β der in gleicher Weise gemessene Winkel ist, den die Tangente der Karkassenlage (11) an der Stelle einnimmt, an der sie sich vom Wulstkern (13) an der axial inneren Seite des Luftreifens (10) löst,
- der radial innere Rand des Wulstkerns zwischen den Stellen, wo sich die Karkassenlage vom Wulstkern löst, abgerundet ist.

2. Einheit nach Anspruch 1, dadurch gekennzeichnet, daß die beiden Schultern (22) durch einen zylindrischen Abschnitt (24) verbunden sind, der eine quasi durchgehende Stütze in radialer Richtung mit im wesentlichen konstantem Durchmesser bildet.

3. Einheit nach Anspruch 1 oder 2, dadurch gekennzeichnet, daß sie ein Gummikissen (14) umfaßt, das zwischen den beiden Wulstkernen (13) an die Felge (21) angrenzend angeordnet ist und als Stütze für die Lauffläche (16) des Luftreifens (10) beim Fahren mit ungenügendem Druck dient.

4. Einheit nach einem der Ansprüche 1 bis 3, dadurch gekennzeichnet, daß β zwischen 30° und 80° liegt.

5. Anordnung nach Anspruch 4, dadurch gekennzeichnet, daß α im wesentlichen gleich 30° und β im wesentlichen gleich 45° ist.

6. Einheit nach einem der Ansprüche 1 bis 5, dadurch gekennzeichnet, daß jeder Wulstkern (13) durch ein Profilelement gebildet ist, das das Profil des Wulstkerns an der radial unteren Seite definiert, wobei Drähte im Inneren des Profilelements aufgewickelt sind.

7. Einheit nach Anspruch 6, dadurch gekennzeichnet, daß die Drähte die Kommunikationsantenne zwischen dem Fahrzeug und Kontrollelementen für den Zustand des an der Einheit montierten Luftreifens sind.

8. Verfahren zur Herstellung einer Einheit nach einem der Ansprüche 1 bis 7, dadurch gekennzeichnet, daß der Luftreifen (10) fortschreitend auf der Felge (21) aufgebaut wird, indem die Bestandteile in der durch den Aufbau des Luftreifens erforderlichen Reihenfolge angeordnet werden.

9. Verfahren nach Anspruch 8, dadurch gekennzeichnet, daß auf der Felge (21) zunächst wenigstens die Karkassenlage(n) (11) und die Wulstkerne (13) angeordnet werden, daß anschließend eine vorvulkanisierte Kammer (16A) angebracht wird, und daß anschließend die Karkassenlage(n) umgeschlagen wird (werden), um eine im wesentlichen in der Mitte der Felge und radial über der Kammer (16A) liegende Überlagerungsschweißung herzustellen.
